# FASCICULE DE BREVET EUROPEEN

(11) **EP 2 846 642 B1**
(45) Date de publication et mention de la délivrance du brevet: **13.09.2017**
(21) Numéro de dépôt: 13727266.2
(22) Date de dépôt: 06.05.2013
(51) Int. Cl.: A23C 9/12, B65D 1/02

(54) **RECIPIENT POUR LA PREPARATION DE YAOURT LIQUIDE DANS UNE YAOURTIERE, ET YAOURTIERE COMPORTANT AU MOINS UN TEL RECIPIENT**
BEHÄLTER ZUR HERSTELLUNG VON FLÜSSIGEM JOGHURT IN EINER JOGHURTHERSTELLUNGSMASCHINE SOWIE JOGHURTHERSTELLUNGSMASCHINE MIT MINDESTENS EINEM SOLCHEN BEHÄLTER
CONTAINER FOR PREPARING LIQUID YOGHURT IN A YOGHURT MAKER, AND YOGHURT MAKER COMPRISING AT LEAST ONE SUCH CONTAINER

(30) Priorité: 09.05.2012 FR 1254234
(43) Date de publication de la demande: 18.03.2015
(73) Titulaire: SEB S.A., 69130 Ecully (FR)
(72) Inventeur: ASTEGNO, Jean-Paul, 64420 Espoey (FR); CHARLES, Patrick, 65290 Louey (FR); LACOURPAILLE, Gérard, 65380 Ossun (FR)
(74) Mandataire: Cémeli, Eric Philippe Laurent
(86) Numéro de dépôt international: PCT/FR2013/051010
(87) Numéro de publication internationale: WO 2013/167838

(56) Documents cités:
- EP-A1- 2 422 626
- WO-A1-99/22994
- FR-A- 819 288
- FR-A1- 2 956 291
- FR-A1- 2 960 141
- JP-A- 2011 116 428
- US-A- 2 531 237
- US-A1- 2008 245 762

## Description

La présente invention concerne le domaine technique de la fabrication des yaourts liquides.

La présente invention concerne plus particulièrement, mais non exclusivement, la fabrication des yaourts liquides dans une yaourtière domestique électrique.

Les yaourtières domestiques électriques comportent usuellement une enceinte logeant un ou plusieurs récipients, ainsi que des moyens de chauffe aptes à porter la température de la préparation disposée dans le ou les récipients à l'intérieur d'un intervalle de température permettant la fabrication de yaourt, usuellement compris entre 40°C et 50°C.

La plupart des yaourtières domestiques sont des appareils présentant une puissance de chauffe peu élevée, permettant d'obtenir des températures comprises entre 40 et 50°C, pour la réalisation de préparations fermentées de type yaourt ou fromage blanc. Les récipients recevant la préparation à transformer reposent usuellement sur le fond chauffant de la yaourtière. Les documents FR 2 244 397 et FR 2 829 907 décrivent notamment des appareils de ce type.

Il est connu du document WO 2011/144870 une yaourtière électrique domestique comportant une enceinte délimitée par une base chauffante et un corps tubulaire formant un support comportant au moins un orifice, et au moins un récipient prévu pour être inséré partiellement dans l'orifice, de sorte que le récipient présente un fond agencé dans l'enceinte à distance de la base chauffante. La base chauffante de ces appareils peut ainsi présenter une puissance de chauffe plus élevée, du fait que les récipients sont suspendus à distance de la base chauffante. Ces appareils peuvent ainsi réaliser d'autres préparations que les yaourts.

Un récipient pour la préparation de yaourt liquide selon le préambule de la revendication 1 est connu du document FR 819 288.

Un objet de la présente invention est de proposer un récipient pour la préparation de yaourt liquide, qui soit adapté aux yaourtières électriques domestiques du type précité.

Un autre objet de la présente invention est de proposer une yaourtière électrique domestique permettant la préparation de yaourts liquides, dans laquelle la manipulation du ou des récipients pour la préparation de yaourt liquide est facilitée.

Ces objets sont atteints avec un récipient pour la préparation de yaourt liquide dans une yaourtière, comportant un fond relié à une paroi latérale rétrécissant en direction d'une ouverture supérieure, la paroi latérale présentant un rebord annulaire d'appui agencé entre le fond et un renflement périphérique, le rebord annulaire d'appui étant agencé dans la moitié inférieure du récipient, du fait que le renflement périphérique est agencé dans la moitié inférieure du récipient et que la paroi latérale rétrécit en direction de l'ouverture supérieure dans la moitié supérieure du récipient. Cette disposition permet d'obtenir un récipient pour la préparation de yaourt liquide qui peut être porté à distance d'une base chauffante présentant des températures trop élevées pour le contenu du récipient et/ou pour la matière du récipient. Le fond s'étendant en dessous du rebord annulaire d'appui est utilisé pour transmettre l'apport thermique transformant la préparation contenue dans le récipient en yaourt liquide. Cette disposition permet de faciliter l'écoulement du yaourt liquide versé par l'ouverture supérieure

Avantageusement alors, le rebord annulaire d'appui est agencé dans le quart inférieur du récipient. Cette disposition permet d'obtenir un apport thermique principalement par le fond du récipient, plus que par la partie inférieure de la paroi latérale.

Avantageusement encore, le rebord annulaire d'appui s'élève en direction du renflement périphérique. Cette disposition permet de faciliter la réalisation du récipient. Cette disposition permet également d'obtenir une meilleure précision dimensionnelle du rebord annulaire d'appui, utile pour réduire les jeux entre le récipient et le support de la yaourtière.

Avantageusement encore, le rebord annulaire d'appui présente des portions arrondies intercalées avec d'autres portions davantage rectilignes. Cette disposition favorise l'obtention d'un récipient s'inscrivant dans une géométrie polygonale, notamment carrée, rectangulaire ou hexagonale, permettant un agencement compact de plusieurs récipients.

Avantageusement alors, le renflement périphérique présente des méplats. Cette disposition favorise un agencement compact de plusieurs récipients, tout en évitant des courbures internes de trop faibles rayons défavorables à un bon écoulement du yaourt liquide.

Avantageusement alors, chacun des méplats s'étend au dessus de l'une des autres portions davantage rectilignes du rebord annulaire d'appui. Cette disposition favorise un agencement compact de plusieurs récipients, tout en permettant de maximiser la surface du fond du récipient utilisée pour les échanges thermiques.

Alors, selon une forme de réalisation avantageuse facilitant la juxtaposition compacte de plusieurs récipients, le rebord annulaire d'appui présente quatre autres portions davantage rectilignes.

Avantageusement encore, le récipient présente des angles arrondis entre le fond et le rebord annulaire d'appui. Cette disposition permet de faciliter la réalisation du récipient, tout en évitant des courbures internes de trop faibles rayons défavorables à un bon écoulement du yaourt liquide.

Alors, selon une forme de réalisation avantageuse facilitant la juxtaposition compacte de plusieurs récipients, le récipient présente quatre angles arrondis. Avantageusement encore, l'ouverture supérieure est circulaire. Cette disposition permet d'envisager un bouchage par vis de l'ouverture supérieure. Cette disposition permet aussi de faciliter le versement du yaourt liquide hors du récipient.

Avantageusement encore, le récipient est réalisé en matière plastique. Cette disposition permet de faciliter la réalisation du récipient.

Ces objets sont atteints également avec une yaourtière électrique domestique comportant une base chauffante, un couvercle principal, un support agencé entre la base chauffante et le couvercle principal, et au moins un récipient pour contenir la préparation alimentaire, chaque récipient étant engagé dans un orifice du support en dessous d'un rebord annulaire d'appui du récipient, de sorte que chaque récipient présente un fond s'étendant à distance de la base chauffante, dans laquelle le récipient est conforme à l'une au moins des caractéristiques précitées. Ces dispositions permettent de réaliser des préparations de type yaourt liquide dans une yaourtière présentant une base chauffante s'étendant à distance des récipients.

Avantageusement, le support comporte un corps tubulaire entourant un plateau présentant le ou les orifices. Le corps tubulaire peut être solidaire ou non du plateau. Si désiré le couvercle principal peut reposer sur le corps tubulaire ; en alternative, le couvercle principal peut notamment reposer sur la base chauffante.

Avantageusement alors, un tronçon supérieur du corps tubulaire s'étendant au dessus du plateau présente une hauteur supérieure à un tronçon inférieur du corps tubulaire s'étendant en dessous du plateau. Cette disposition permet d'utiliser un couvercle principal de hauteur plus réduite, du fait que la majeure partie du ou des récipients pour la préparation de yaourts liquides s'étend au dessus du plateau, et non en dessous.

Avantageusement alors, le corps tubulaire est réversible et peut être disposé sur la base chauffante selon une première disposition ainsi que selon une deuxième disposition inversée, de sorte que la distance entre le plateau et la base chauffante est plus importante dans la deuxième disposition inversée que dans la première disposition. Cette disposition permet d'utiliser des récipients de type bouteille pour réaliser des yaourts liquides dans la première disposition du corps tubulaire, et des récipients de type pot pour réaliser des yaourts plus fermes ou des fromages blancs dans la deuxième disposition inversée du corps tubulaire.

L'invention sera mieux comprise à l'étude d'un exemple de réalisation, pris à titre nullement limitatif, illustrés dans les figures annexées, dans lesquelles :
- la figure 1 est une vue en coupe longitudinale d'un exemple de réalisation d'une yaourtière électrique domestique comportant un support et des récipients pour la préparation de yaourt liquide selon l'invention,
- la figure 2 est une vue en perspective du support illustré sur la figure 1, selon une première disposition correspondant à la disposition de la figure 1,
- la figure 3 est une vue en perspective du support illustré sur les figures 1 et 2, selon une deuxième disposition inversée par rapport à la première disposition,
- la figure 4 est une vue en perspective de dessus d'un récipient pour la préparation de yaourt liquide illustré sur la figure 1,
- la figure 5 est une vue en perspective de dessous d'un récipient pour la préparation de yaourt liquide illustré sur les figures 1 et 4,
- la figure 6 est une vue en perspective de dessus du support illustré sur les figures 1 à 3 logeant un récipient pour la préparation de yaourt liquide illustré sur les figures 1 , 4 et 5,
- la figure 7 est une vue en perspective de dessus du support illustré sur les figures 1 à 3 et 6, portant les récipients illustrés sur les figures 1 et 4 à 6,
- la figure 8 est une vue en perspective de dessous du support illustré sur les figures 1 à 3 et 6 à 7, portant les récipients illustrés sur les figures 1 et 4 à 7.

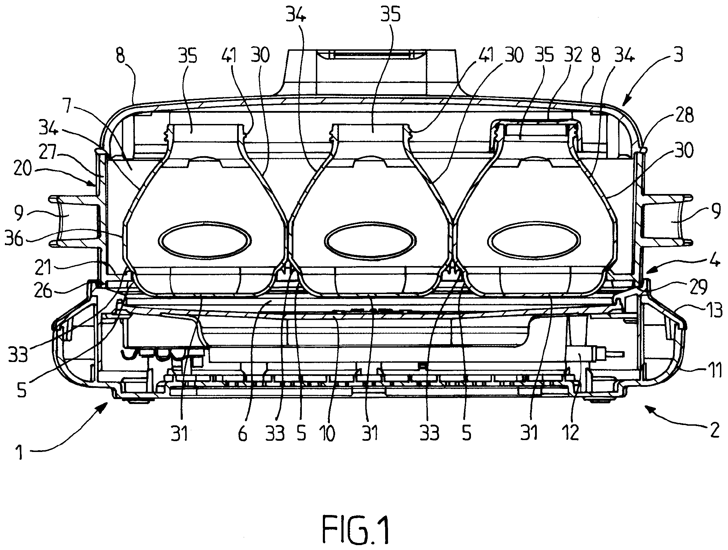

La yaourtière électrique domestique 1 illustrée sur la figure 1 comporte une base chauffante 2, un couvercle principal 3, un support 4 agencé entre la base chauffante 2 et le couvercle principal 3, et au moins un récipient 30 pour contenir la préparation alimentaire. Tel que visible sur la figure 1, le couvercle principal 3 s'étend au dessus de plusieurs récipients 30.

Le support 4 comporte plusieurs orifices 5 prévus chacun pour recevoir un récipient 30. Chaque récipient 30 présente un rebord annulaire d'appui 33 prévu pour reposer sur le support 4.

Tel que montré sur la figure 1, les récipients 30 comportent un rebord annulaire d'appui 33 reposant sur le support 4 autour de l'un des orifices 5 du support 4. Ainsi chaque récipient 30 est engagé dans un des orifices 5 du support 4 en dessous du rebord annulaire d'appui 33 du récipient 30, de sorte que chaque récipient 30 présente un fond 31 s'étendant à distance de la base chauffante 2. Si désiré, des bouchons 32 peuvent fermer les récipients 30.

Plus particulièrement dans l'exemple de réalisation illustré sur la figure 1, le support 4 repose sur la base chauffante 2 et le couvercle principal 3 repose sur le support 4. Le support 4 comporte des organes de préhension 9.

La base chauffante 2 comporte une plaque métallique 10 montée dans une embase 11. La plaque métallique 10 est associée à des moyens de chauffe 12 formés par exemple par un élément chauffant blindé fixé sous la plaque métallique 10. La plaque métallique 10 est par exemple réalisée en aluminium pour assurer une répartition homogène de la température sur toute la surface de la plaque métallique 10, et de préférence en aluminium moulé. Les moyens de chauffe 12 sont par exemple disposés dans la partie centrale de la plaque métallique 10. L'embase 11 comprend en outre un panneau de commande 13 et l'électronique associée pour piloter les moyens de chauffe.

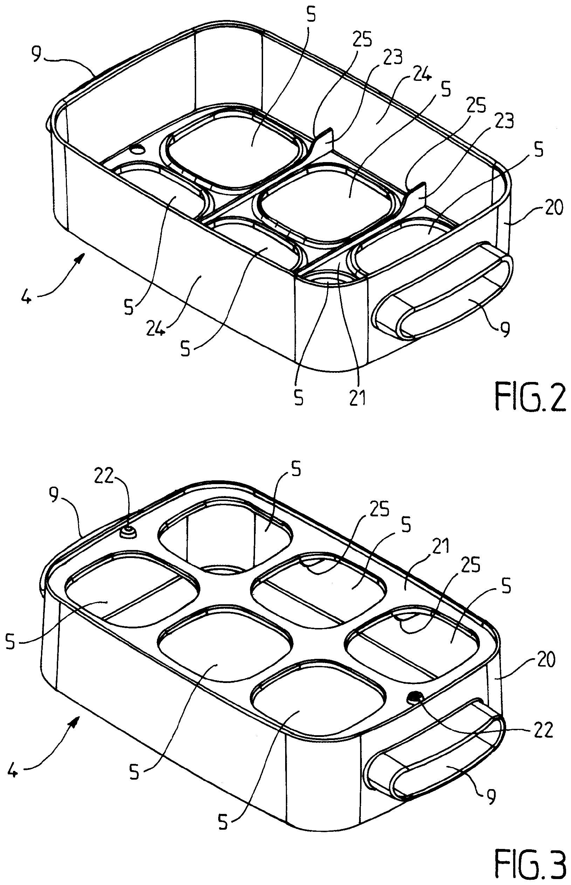

Le support 4 comporte un corps tubulaire 20 entourant un plateau 21 présentant les orifices 5. Le corps tubulaire 20 repose sur la base chauffante 2, plus particulièrement autour de la plaque métallique 10. Le support 4 définit avec la base chauffante 2 un volume inférieur 6 logeant une partie inférieure des récipients 30. Si désiré, le plateau 21 peut comporter un ou plusieurs évents 22, mieux visibles sur la figure 3. Le support 4 définit avec le couvercle principal 3 un volume supérieur 7 logeant une partie supérieure des récipients 30. Le couvercle principal 3 repose sur le corps tubulaire 20. Si désiré, le couvercle principal 3 peut comporter un ou plusieurs autres évents 8.

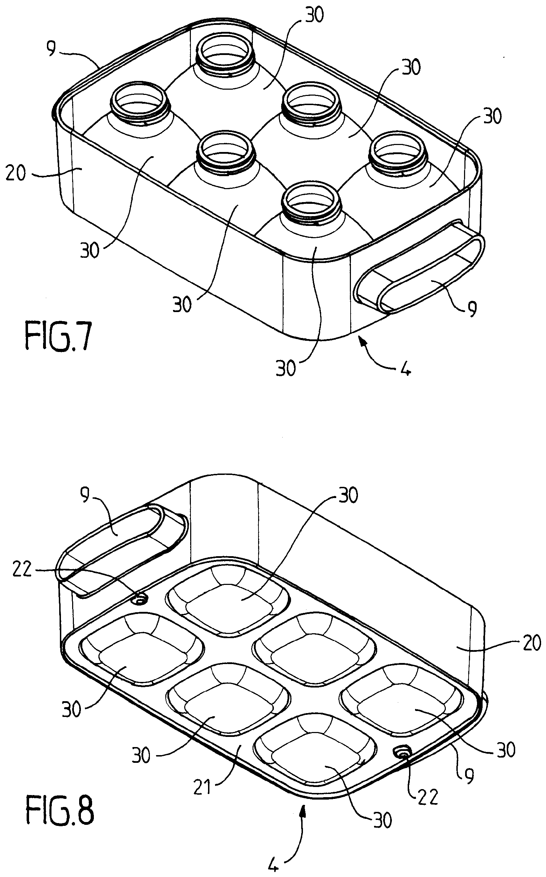

Dans l'exemple de réalisation illustré sur les figures, le plateau 21 est solidaire du corps tubulaire 20. Tel que mieux visible sur les figures 2 et 3, le support 4 comporte six orifices 5. Tel que montré sur les figures 7 et 8, le support 4 reçoit six récipients 30. Deux nervures transversales 23 relient deux parois opposées 24 du corps tubulaire 20. Les nervures transversales 23 permettent de porter un bac de grande capacité (non représenté) au dessus des orifices 5. Les nervures transersales 23 présentent des extrémités 25 relevées, pour centrer le bac à l'intérieur du corps tubulaire 20.

Tel que visible sur la figure 1, un tronçon supérieur 27 du corps tubulaire 20 s'étendant au dessus du plateau 21 présente une hauteur supérieure à un tronçon inférieur 26 du corps tubulaire 20 s'étendant en dessous du plateau 21. Le volume supérieur 7 est ainsi plus important que le volume inférieur 6. Tel que montré sur la figure 1, les récipients 30 sont logés essentiellement dans le volume supérieur 7.

Le corps tubulaire 20 présente avantageusement un bord annulaire supérieur 28 et un bord annulaire inférieur 29 parallèles. Plus particulièrement, le corps tubulaire 20 est réversible. Le corps tubulaire 20 peut être disposé sur la base chauffante 2 selon une première disposition illustrée sur les figures 1 et 2, prévue par exemple pour la réalisation de yaourts liquides dans les récipients 30. Le corps tubulaire peut aussi être disposé sur la base chauffante 2 selon une deuxième disposition inversée représentée sur la figure 3, de sorte que la distance entre le plateau 21 et la base chauffante 2 est plus importante dans la deuxième disposition inversée que dans la première disposition.

Tel que représenté sur les figures 1, 6 et 7, les récipients 30 reposant sur le support 4 comportent une partie supérieure s'étendant au dessus du plateau 21 ; tel que représenté sur les figures 1 et 8, les récipients 30 reposant sur le support 4 comportent une partie inférieure s'étendant en dessous du plateau 21. Tel que visible sur la figure 1, le fond 31 des récipients 30 reposant sur le support 4 s'étend en dessous du plateau 21 et en dessous du tronçon inférieur 26 du corps tubulaire 20. Ainsi lorsque le support 4 est disposé sur une surface plane, les récipients 30 sont soulevés du support 4, ce qui facilite leur préhension.

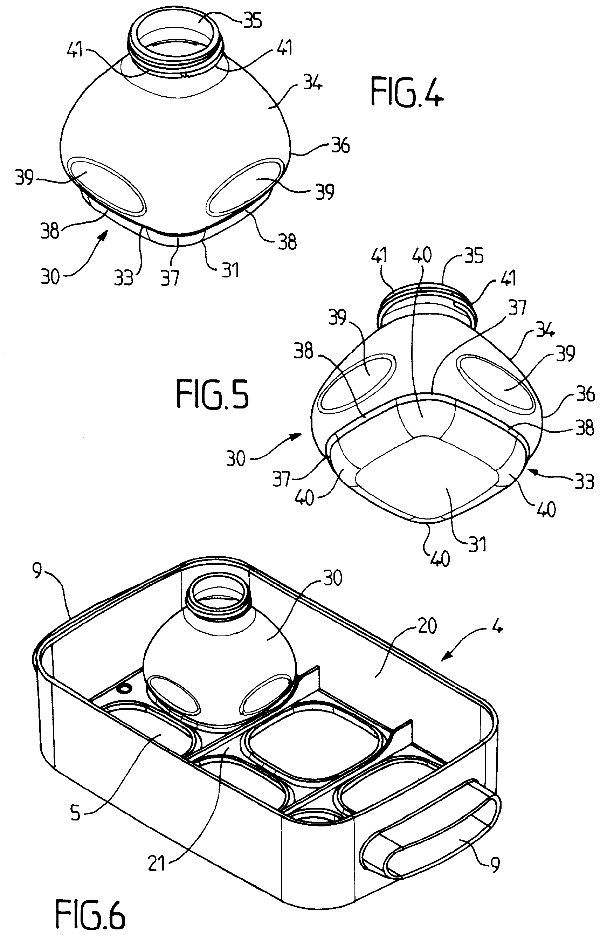

Tel que mieux visible sur les figures 4 et 5, le fond 31 du récipient 30 pour la préparation de yaourt liquide est relié à une paroi latérale 34 rétrécissant en direction d'une ouverture supérieure 35. La paroi latérale 34 présente le rebord annulaire d'appui 33 agencé entre le fond 31 et un renflement périphérique 36.

Le rebord annulaire d'appui 33 est agencé dans la moitié inférieure du récipient 30, plus particulièrement dans le quart inférieur du récipient 30. Le rebord annulaire d'appui 33 reposant sur le support 4 autour de l'un des orifices 5 permet d'assurer une étanchéité relative entre le volume inférieur 6 et le volume supérieur 7.

Tel que mieux visible sur la figure 1, le rebord annulaire d'appui 33 s'élève en direction du renflement périphérique 36. Tel que mieux visible sur les figures 4 et 5, le rebord annulaire d'appui 33 présente des portions arrondies 37 intercalées avec d'autres portions 38 davantage rectilignes.

Pour faciliter un rangement compact des récipients 30 sur le support 4, tel que représenté sur les figures 7 et 8, le renflement périphérique 36 présente des méplats 39. Plus particulièrement, chacun des méplats 39 s'étend au dessus de l'une des autres portions 38 davantage rectilignes du rebord annulaire d'appui 33.

Par ailleurs, le récipient 30 présente des angles arrondis 40 entre le fond 31 et le rebord annulaire d'appui 33.

Dans l'exemple de réalisation illustré sur les figures, les récipients 30 présentent une géométrie carrée, voire un encombrement s'inscrivant dans un cube. Le rebord annulaire d'appui 33 présente quatre autres portions 38 davantage rectilignes. Le renflement périphérique 36 présente quatre méplats 39. Le récipient 30 présente quatre angles arrondis 40.

L'ouverture supérieure 35 est circulaire. Des filets extérieurs 41 sont ménagés autour de l'ouverture supérieure 35. Le bouchon 32 fermant le récipient 30 peut ainsi être un bouchon à vis. Un bouchage relativement étanche du récipient 30 est en effet souhaité pour pouvoir bien agiter la préparation contenue dans le récipient 30.

Tel que bien visible sur la figure 1, le renflement périphérique 36 est agencé dans la moitié inférieure du récipient 30. La section de la moitié supérieure du récipient 30 est décroissante en direction de l'ouverture supérieure 35 du récipient 30. Ainsi, tel que bien visible sur la figure 1, la paroi latérale 34 rétrécit en direction de l'ouverture supérieure 35 dans la moitié supérieure du récipient 30.

Le récipient 30 est avantageusement réalisé en matière plastique, par exemple en polypropylène. Le récipient 30 peut notamment être réalisé par injection-soufflage.

L'appareil selon l'invention s'utilise et fonctionne de la manière suivante.

L'utilisateur dispose le support 4 sur la base chauffante 2, place les récipients 30 contenant la préparation à transformer en yaourt liquide sur le support 4 et dispose le couvercle principal 3 sur le support 4. L'utilisateur sélectionne ensuite un programme de chauffe adapté à la réalisation de yaourts liquides. L'utilisateur peut déplacer le support 4 portant les récipients 30 en utilisant les organes de préhension 9. L'utilisateur peut aussi retourner le support 4 sur la base chauffante 2 pour placer des pots présentant un rebord annulaire d'appui dans les orifices du support, de sorte que le fond de chaque pot s'étende aussi à distance de la base chauffante 2. L'utilisateur obtient ainsi un appareil adapté à la réalisation de plusieurs types de yaourts, liquides ou non.

A titre de variante, le support 4 ne repose pas nécessairement directement sur la base chauffante 2.

A titre de variante, le couvercle principal 3 ne repose pas nécessairement directement sur le support 4. Le couvercle principal 3 peut notamment reposer sur la base chauffant 2 en coiffant le support 4.

A titre de variante, le support 4 peut comporter au moins un orifice 5 dans lequel un récipient 30 peut être partiellement inséré, de sorte que chaque récipient 30 présente un fond 31 s'étendant à distance de la base chauffante 2 lorsque le support 4 est en place sur la base chauffante 2.

A titre de variante, le support 4 ne comporte pas nécessairement un plateau 21 plan. Notamment, les orifices 5 peuvent être délimités par des nervures supérieures s'étendant à partir d'une base du support 4.

A titre de variante, le support 4 ne comporte pas nécessairement un tronçon inférieur 26 de corps tubulaire, et/ou ne comporte pas nécessairement un tronçon supérieur 27 de corps tubulaire.

A titre de variante, le support 4 n'est pas nécessairement réalisé en une seule pièce. Notamment, le plateau 21 n'est pas nécessairement solidaire du corps tubulaire 20. En alternative, le plateau 21 pourrait être monté amovible par rapport au corps tubulaire 20. Un anneau pourrait aussi être agencé soit au dessus, soit en dessous d'une pièce perforée présentant le ou les orifices 5. L'anneau peut ainsi reposer sur la base chauffante 2 et porter la pièce perforée, ou reposer sur la pièce perforée et porter le couvercle principal 3.

A titre de variante, le fond 31 des récipients 30 ne s'étend pas nécessairement en dessous du support 4. A titre de variante, le fond 31 des récipients 30 ne s'étend pas nécessairement en dessous du plateau 21.

A titre de variante, les récipients 30 ne s'inscrivent pas nécessairement dans une géométrie carrée ou à quatre côtés, et/ou les orifices 5 ne présentent pas nécessairement une configuration carrée ou à quatre côtés.

La présente invention n'est nullement limitée à l'exemple de réalisation décrit et à ses variantes, mais englobe de nombreuses modifications dans le cadre des revendications.

## Revendications

1. Récipient (30) pour la préparation de yaourt liquide dans une yaourtière, comportant un fond (31) relié à une paroi latérale (34) rétrécissant en direction d'une ouverture supérieure (35), la paroi latérale (34) présentant un rebord annulaire d'appui (33) agencé entre le fond (31) et un renflement périphérique (36), le rebord annulaire d'appui (33) étant agencé dans la moitié inférieure du récipient (30), **caractérisé en ce que** le renflement périphérique (36) est agencé dans la moitié inférieure du récipient (30) et **en ce que** la paroi latérale (34) rétrécit en direction de l'ouverture supérieure (35) dans la moitié supérieure du récipient (30).

2. Récipient (30) pour la préparation de yaourt liquide dans une yaourtière selon la revendication 1, **caractérisé en ce que** le rebord annulaire d'appui (33) est agencé dans le quart inférieur du récipient (30).

3. Récipient (30) pour la préparation de yaourt liquide dans une yaourtière selon l'une des revendications 1 ou 2, **caractérisé en ce que** le rebord annulaire d'appui (33) s'élève en direction du renflement périphérique (36).

4. Récipient (30) pour la préparation de yaourt liquide dans une yaourtière selon l'une des revendications 1 à 3, **caractérisé en ce que** le rebord annulaire d'appui (33) présente des portions arrondies (37) intercalées avec d'autres portions (38) davantage rectilignes.

5. Récipient (30) pour la préparation de yaourt liquide dans une yaourtière selon l'une des revendications 1 à 4, **caractérisé en ce que** le renflement périphérique (36) présente des méplats (39).

6. Récipient (30) pour la préparation de yaourt liquide dans une yaourtière selon les revendications 4 et 5, **caractérisé en ce que** chacun des méplats (39) s'étend au dessus de l'une des autres portions (38) davantage rectilignes du rebord annulaire d'appui (33).

7. Récipient (30) pour la préparation de yaourt liquide dans une yaourtière selon l'une des revendications 4 à 6, **caractérisé en ce que** le rebord annulaire d'appui (33) présente quatre autres portions (38) davantage rectilignes.

8. Récipient (30) pour la préparation de yaourt liquide dans une yaourtière selon l'une des revendications 1 à 7, **caractérisé en ce qu'**il présente des angles arrondis (40) entre le fond (31) et le rebord annulaire d'appui (33).

9. Récipient (30) pour la préparation de yaourt liquide dans une yaourtière selon la revendication 8, **caractérisé en ce qu'**il présente quatre angles arrondis (40).

10. Récipient (30) pour la préparation de yaourt liquide dans une yaourtière selon l'une des revendications 1 à 9, **caractérisé en ce que** l'ouverture supérieure (35) est circulaire.

11. Récipient (30) pour la préparation de yaourt liquide dans une yaourtière selon la revendication 10, **caractérisé en ce que** des filets extérieurs (41) sont ménagés autour de l'ouverture supérieure (35).

12. Récipient (30) pour la préparation de yaourt liquide dans une yaourtière selon la revendication 11, **caractérisé en ce qu'**un bouchon (32) à vis ferme le récipient (30).

13. Récipient (30) pour la préparation de yaourt liquide dans une yaourtière selon l'une des revendications 1 à 12, **caractérisé en ce qu'**il est réalisé en matière plastique.

14. Yaourtière électrique domestique (1) comportant une base chauffante (2), un couvercle principal (3), un support (4) agencé entre la base chauffante (2) et le couvercle principal (3), et au moins un récipient (30) pour contenir la préparation alimentaire, chaque récipient (30) étant engagé dans un orifice (5) du support (4) en dessous d'un rebord annulaire d'appui (33) du récipient (30), de sorte que chaque récipient (30) présente un fond (31) s'étendant à distance de la base chauffante (2), **caractérisée en ce que** le récipient (30) est conforme à l'une des revendications 1 à 13.

15. Yaourtière électrique domestique (1) selon la revendication 14, **caractérisée en ce que** le support (4) comporte un corps tubulaire (20) entourant un plateau (21) présentant le ou les orifices (5).

16. Yaourtière électrique domestique (1) selon la revendication 15, **caractérisée en ce qu'**un tronçon supérieur (27) du corps tubulaire (20) s'étendant au dessus du plateau (21) présente une hauteur supérieure à un tronçon inférieur (26) du corps tubulaire (20) s'étendant en dessous du plateau (21).

17. Yaourtière électrique domestique (1) selon l'une des revendications 15 ou 16, **caractérisée en ce que** le corps tubulaire (20) est réversible et peut être disposé sur la base chauffante (2) selon une première disposition ainsi que selon une deuxième disposition inversée, de sorte que la distance entre le plateau (21) et la base chauffante (2) est plus importante dans la deuxième disposition inversée que dans la première disposition.

## Patentansprüche

1. Behälter (30) zur Zubereitung von flüssigem Joghurt in einer Joghurtmaschine, der einen Boden (31), der mit einer Seitenwand (34) verbunden ist, die sich in Richtung einer oberen Öffnung (35) verjüngt, wobei die Seitenwand (34) einen ringförmigen Auflagerand (33) aufweist, der zwischen dem Boden (31) und einem peripheren Wulst (36) angeordnet ist, wobei der ringförmige Auflagerand (33) in der unteren Hälfte des Behälters (30) angeordnet ist, **dadurch gekennzeichnet, dass** der periphere Wulst (36) in der unteren Hälfte des Behälters (30) angeordnet ist, und dass sich die Seitenwand (34) in Richtung der oberen Öffnung (35) in der oberen Hälfte des Behälters (30) verjüngt.

2. Behälter (30) zur Zubereitung von flüssigem Joghurt in einer Joghurtmaschine nach Anspruch 1, **dadurch gekennzeichnet, dass** der ringförmige Auflagerand (33) im unteren Viertel des Behälters (30) angeordnet ist.

3. Behälter (30) zur Zubereitung von flüssigem Joghurt in einer Joghurtmaschine nach einem der Ansprüche 1 oder 2, **dadurch gekennzeichnet, dass** der ringförmige Auflagerand (33) in Richtung des peripheren Wulstes (36) ansteigt.

4. Behälter (30) zur Zubereitung von flüssigem Joghurt in einer Joghurtmaschine nach einem der Ansprüche 1 bis 3, **dadurch gekennzeichnet, dass** der ringförmige Auflagerand (33) abgerundete Abschnitte (37) aufweist, die zwischen weiteren, eher geradlinigen Abschnitten (38) eingeschoben sind.

5. Behälter (30) zur Zubereitung von flüssigem Joghurt in einer Joghurtmaschine nach einem der Ansprüche 1 bis 4, **dadurch gekennzeichnet, dass** der periphere Wulst (36) Abflachungen (39) aufweist.

6. Behälter (30) zur Zubereitung von flüssigem Joghurt in einer Joghurtmaschine nach den Ansprüchen 4 und 5, **dadurch gekennzeichnet, dass** sich jede der Abflachungen (39) über einen der weiteren, eher geradlinigen Abschnitte (38) des ringförmigen Auflagerands (33) erstreckt.

7. Behälter (30) zur Zubereitung von flüssigem Joghurt in einer Joghurtmaschine nach einem der Ansprüche 4 bis 6, **dadurch gekennzeichnet, dass** der ringförmige Auflagerand (33) vier weitere, eher geradlinige Abschnitte (38) aufweist.

8. Behälter (30) zur Zubereitung von flüssigem Joghurt in einer Joghurtmaschine nach einem der Ansprüche 1 bis 7, **dadurch gekennzeichnet, dass** er abgerundete Ecken (40) zwischen dem Boden (31) und dem ringförmigen Auflagerand (33) aufweist.

9. Behälter (30) zur Zubereitung von flüssigem Joghurt in einer Joghurtmaschine nach Anspruch 8, **dadurch gekennzeichnet, dass** er vier abgerundete Ecken (40) aufweist.

10. Behälter (30) zur Zubereitung von flüssigem Joghurt in einer Joghurtmaschine nach einem der Ansprüche 1 bis 9, **dadurch gekennzeichnet, dass** die obere Öffnung (35) kreisförmig ist.

11. Behälter (30) zur Zubereitung von flüssigem Joghurt in einer Joghurtmaschine nach Anspruch 10, **dadurch gekennzeichnet, dass** ein äußeres Gewinde (41) um die obere Öffnung (35) ausgebildet ist.

12. Behälter (30) zur Zubereitung von flüssigem Joghurt in einer Joghurtmaschine nach Anspruch 11, **dadurch gekennzeichnet, dass** ein Schraubverschluss (32) den Behälter (30) verschließt.

13. Behälter (30) zur Zubereitung von flüssigem Joghurt in einer Joghurtmaschine nach einem der Ansprüche 1 bis 12, **dadurch gekennzeichnet, dass** er aus Kunststoff hergestellt ist.

14. Elektrische Haushaltsjoghurtmaschine (1), die eine Heizbasis (2), eine Hauptabdeckung (3), einen Träger (4), der zwischen der Heizbasis (2) und der Hauptabdeckung (3) angeordnet ist, und mindestens einen Behälter (30) umfasst, um die Lebensmittelzubereitung zu enthalten, wobei jeder Behälter (30) in eine Öffnung (5) des Trägers (4) unter einem ringförmigen Auflagerand (33) des Behälters (30) eingreift, so dass jeder Behälter (30) einen Boden (31) aufweist, der sich im Abstand von der Heizbasis (2) erstreckt, **dadurch gekennzeichnet, dass** der Behälter (30) in Übereinstimmung mit einem der Ansprüche 1 bis 13 ist.

15. Elektrische Haushaltsjoghurtmaschine (1) nach Anspruch 14, **dadurch gekennzeichnet, dass** der Träger (4) einen rohrförmigen Körper (20) aufweist, der eine Platte (21) umgibt, die die Öffnung(en) (5) aufweist.

16. Elektrische Haushaltsjoghurtmaschine (1) nach Anspruch 15, **dadurch gekennzeichnet, dass** sich ein oberer Abschnitt (27) des rohrförmigen Körpers (20), der sich oberhalb der Platte (21) erstreckt, eine größere Höhe als ein unterer Abschnitt (26) des rohrförmigen Körpers (20) aufweist, der sich unterhalb der Platte (21) erstreckt.

17. Elektrische Haushaltsjoghurtmaschine (1) nach einem der Ansprüche 15 oder 16, **dadurch gekennzeichnet, dass** der rohrförmige Körper (20) umkehrbar ist und auf der Heizbasis (2) in einer ersten Anordnung sowie in einer zweiten umgekehrten Anordnung angeordnet sein kann, so dass der Abstand zwischen der Platte (21) und der Heizbasis (2) in der zweiten umgekehrten Anordnung größer als in der ersten Anordnung ist.

## Claims

1. Container (30) for preparing liquid yoghurt in a yoghurt maker, comprising a base (31) connected to a lateral wall (34) narrowing in the direction of an upper opening (35), the lateral wall (34) presenting an annular supporting edge (33) disposed between the base (31) and a peripheral bulge (36), the annular supporting edge (33) being disposed in the lower half of the container (30), **characterised in that** the peripheral bulge (36) is disposed in the lower half of the container (30) and **in that** the lateral wall (34) narrows in the direction of the upper opening (35) in the upper half of the container (30).

2. Container (30) for preparing liquid yoghurt in a yoghurt maker according to claim 1, **characterised in that** the annular supporting edge (33) is disposed in the lower quarter of the container (30).

3. Container (30) for preparing liquid yoghurt in a yoghurt maker according to one of claims 1 or 2, **characterised in that** the annular supporting edge (33) raises in the direction of the peripheral bulge (36).

4. Container (30) for preparing liquid yoghurt in a yoghurt maker according to one of claims 1 to 3, **characterised in that** the annular supporting edge (33) presents rounded sections (37) inserted with other more straight-lined sections (38).

5. Container (30) for preparing liquid yoghurt in a yoghurt maker according to one of claims 1 to 4, **characterised in that** the peripheral bulge (36) presents flat spots (39).

6. Container (30) for preparing liquid yoghurt in a yoghurt maker according to claims 4 and 5, **characterised in that** each one of the flat spots (39) extend above one of the other further straight-lined sections (38) of the annular supporting edge (33).

7. Container (30) for preparing liquid yoghurt in a yoghurt maker according to one of claims 4 to 6, **characterised in that** the annular supporting edge (33) presents four other further straight-lined sections (38).

8. Container (30) for preparing liquid yoghurt in a yoghurt maker according to one of claims 1 to 7, **characterised in that** it presents rounded angles (40) between the base (31) and the annular supporting edge (33).

9. Container (30) for preparing liquid yoghurt in a yoghurt maker according to claim 8, **characterised in that** it presents four rounded angles (40).

10. Container (30) for preparing liquid yoghurt in a yoghurt maker according to one of claims 1 to 9, **characterised in that** the upper opening (35) is circular.

11. Container (30) for preparing liquid yoghurt in a yoghurt maker according to claim 10, **characterised in that** the exterior nets (41) are arranged around the upper opening (35).

12. Container (30) for preparing liquid yoghurt in a yoghurt maker according to claim 11, **characterised in that** a screw cap (32) closes the container (30).

13. Container (30) for preparing liquid yoghurt in a yoghurt maker according to one of claims 1 to 12, **characterised in that** it is made from plastic.

14. Domestic electric yoghurt maker (1) comprising a heating base (2), a main cover (3), a support (4) disposed between the heating base (2) and the main cover (3), and at least one container (30) to contain the food preparation, each container (30) being entered into an orifice (5) of the support (4) below an annular supporting edge (33) of the container (30), such that each container (30) presents a base (31) extending at a distance from the heating base (2), **characterised in that** the container (30) conforms with one of claims 1 to 13.

15. Domestic electric yoghurt maker (1) according to claim 14, **characterised in that** the support (4) comprises a tubular body (20) surrounding a plate (21) presenting the hole(s) (5).

16. Domestic electric yoghurt maker (1) according to claim 15, **characterised in that** an upper section (27) of the tubular body (20) extending above the plate (21) presents a height higher than a lower section (26) of the tubular body (20) extending below the plate (21).

17. Domestic electric yoghurt maker (1) according to one of claims 15 or 16, **characterised in that** the tubular body (20) is reversible and can be positioned on the heating base (2) according to a first placement as well as a second inverted placement, such that the distance between the plate (21) and the heating base (2) is more significant in the second inverted placement than in the first placement.
